(19) **Europäisches Patentamt European Patent Office Office européen des brevets**

(11) **EP 4 645 351 A1**

(12) **EUROPEAN PATENT APPLICATION**
published in accordance with Art. 153(4) EPC

(43) Date of publication:
05.11.2025 Bulletin 2025/45

(21) Application number: 24811452.2

(22) Date of filing: 19.02.2024

(51) International Patent Classification (IPC):
*H01F 17/04* (2006.01)  *H01F 27/24* (2006.01)
*H01F 3/14* (2006.01)  *H02M 1/42* (2007.01)

(52) Cooperative Patent Classification (CPC):
H01F 3/14; H01F 17/04; H01F 27/24; H02M 1/42

(86) International application number:
PCT/KR2024/095380

(87) International publication number:
WO 2024/242515 (28.11.2024 Gazette 2024/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.05.2023 KR 20230067585

(71) Applicant: Samsung Electronics Co., Ltd.
Suwon-si, Gyeonggi-do 16677 (KR)

(72) Inventors:
- YANG, Jungwoo
  Suwon-si Gyeonggi-do 16677 (KR)
- KIM, Moonyoung
  Suwon-si Gyeonggi-do 16677 (KR)
- KIM, Haedeun
  Suwon-si Gyeonggi-do 16677 (KR)

(74) Representative: Appleyard Lees IP LLP
15 Clare Road
Halifax HX1 2HY (GB)

(54) **INDUCTOR AND POWER FACTOR CORRECTION CONVERTER INCLUDING SAME**

(57)  A power factor correction converter according to embodiments of the present disclosure may comprise: a rectifying unit configured to rectify an AC voltage to a DC voltage; an inductor configured to store energy; and a switching unit including at least one switch. The inductor may comprise: an outer leg unit including an upper outer leg core and a lower outer leg core; a middle leg unit including at least one middle leg core and at least one air gap; and a coil unit including a coil. The at least one middle leg core may include an inner hole.

*FIG.4*

EP 4 645 351 A1

**Description**

**[Technical Field]**

The disclosure relates to an inductor and a power factor correction converter including the same.

**[Background Art]**

Inductors, which may be made of a core and a coil wound around the core, are elements widely used in the field of electrical and electronic circuits. An inductor serves as a component of various electronic devices, such as televisions and mobile electronic devices. For example, a power circuit of an alternating current (AC) / direct durrent (DC) converter or a DC/DC converter, included in a power supply of an electronic device, may include an inductor.

Typically, a power factor correction converter, adapted to receive AC commercial power as input and outputs DC power therefrom, may include a switching unit and an inductor to improve the power factor correction and satisfy harmonic regulations. For example, a boost power factor correction converter may include a filter having an inductor and a capacitor to reduce a current ripple generated at an input terminal or an output terminal.

In such a boost power factor correction converter, the closer a phase of an input AC voltage is to either 0° or 180°, the larger the input AC voltage, and the less its output load, the more its operating frequency may increase. As the operating frequency increases, the boost power factor correction converter can suffer from switching loss and heat generation.

**[Disclosure]**

**[Technical Problem]**

Embodiments of the disclosure provide an inductor including a center-leg core having a plurality of air gaps and an inner hole with a high relative permeability, thereby providing an inductor with its maximized and/or improved efficiency and a power factor correction converter including the inductor.

**[Technical Solution]**

A power factor correction converter according to example embodiments of the disclosure may comprise: a rectifier configured to rectify an AC voltage to a DC voltage, an inductor configured to store energy, and a switching unit comprising at least one switch. The inductor may comprise: an outer-leg portion including an upper outer-leg core and a lower outer-leg core, a center-leg portion including at least one center-leg core and at least one air gap, and a coil portion including a coil. The center-leg core may include an inner hole.

In an example embodiment, the at least one center-leg core may comprise a U-shaped structure with an open side. The inner hole may be formed inside the U-shaped structure.

In an example embodiment, the at least one center-leg core may comprise: a first core plate formed in a first direction, a second core plate extending from a first end of the first core plate in a second direction perpendicular to the first direction, and a third core plate extending from a second end of the first core plate in the second direction, parallel to the second core plate. The inner hole may be formed inside a U-shaped structure formed by an arrangement of the first core plate, the second core plate, and the third core plate.

In an example embodiment, the at least one center-leg core may include a pillar including an empty an inner space. The inner hole may be formed in the inner space of the pillar structure.

In an example embodiment, the at least one center-leg core may comprise a pillar core in which a core plate including an outer periphery and an inner periphery extends in a vertical direction. The inner hole may be formed inside the pillar core.

In an example embodiment, the at least one center-leg core may have a permeability greater than a permeability of the upper outer-leg core and the lower outer-leg core included in the outer-leg portion.

In an example embodiment, a relative permeability of the at least one center-leg core may be in a range of 7,000 to 20,000.

In an example embodiment, the at least one air gap is formed having a length shorter than a reference air gap length, thereby reducing a penetration depth of a fringing flux with respect to the coil.

In an example embodiment, the center-leg portion may comprise a first center-leg core, a first air gap formed between the first center-leg core and the upper outer-leg core, and a second air gap formed between the first center-leg core and the lower outer-leg core.

In an example embodiment, the center-leg portion may comprise a first center-leg core, a second center-leg core,

a first air gap formed between the first center-leg core and the upper outer-leg core, a second air gap formed between the first center-leg core and the second center-leg core, and a third air gap formed between the second center-leg core and the lower outer-leg core.

An inductor according to example embodiments of the disclosure may comprise: an outer-leg portion comprising an upper outer-leg core and a lower outer-leg core, a center-leg portion comprising at least one center-leg core and at least one air gap, and a coil portion including a coil. The center-leg core may comprise an inner hole.

In an example embodiment, the at least one center-leg core may include a U-shaped structure with an open side. The inner hole may be formed inside the U-shaped structure.

In an example embodiment, the at least one center-leg core may comprise: a first core plate formed in a first direction, a second core plate extending from a first end of the first core plate in a second direction perpendicular to the first direction, and a third core plate extending from a second end of the first core plate in the second direction, parallel to the second core plate. The inner hole may be formed inside a U-shaped structure formed by an arrangement of the first core plate, the second core plate, and the third core plate.

In an example embodiment, the at least one center-leg core may comprise a pillar including an empty an inner space. The inner hole may be formed in the inner space of the pillar structure.

In an example embodiment, the at least one center-leg core may comprise a pillar core in which a core plate including an outer periphery and an inner periphery extends in a vertical direction. The inner hole may be formed inside the pillar core.

In an example embodiment, the at least one center-leg core may have a permeability greater than a permeability of the upper outer-leg core and the lower outer-leg core included in the outer-leg portion.

In an example embodiment, a relative permeability of the at least one center-leg core may be in a range of 7,000 to 20,000.

In an example embodiment, the at least one air gap may be formed having a length shorter than a reference air gap length, thereby reducing a penetration depth of a fringing flux with respect to the coil.

In an example embodiment, the center-leg portion may comprise a first center-leg core, a first air gap formed between the first center-leg core and the upper outer-leg core, and a second air gap formed between the first center-leg core and the lower outer-leg core.

In an example embodiment, the center-leg portion may comprise: a first center-leg core, a second center-leg core, a first air gap formed between the first center-leg core and the upper outer-leg core, a second air gap formed between the first center-leg core and the second center-leg core, and a third air gap formed between the second center-leg core and the lower outer-leg core.

[Advantageous Effects]

According to various example embodiments of the disclosure, an inductor and a power factor correction converter including the same may include a plurality of air gaps in the center-leg portion, thereby reducing a fringing effect and reducing heat generation.

Further, the inductor and the power factor correction converter including the inductor according to various example embodiments of the disclosure may include a center-leg core having a high relative magnetic permeability, thereby increasing its inductance, decreasing its operating frequency, and minimizing and/or reducing its switching loss.

Furthermore, the inductor and the power factor correction converter including the inductor according to various example embodiments of the disclosure may include a center-leg core having an inner hole therein, thereby minimizing and/or reducing air gaps and minimizing and/or reducing heat generation.

Effects obtainable from example embodiments of the disclosure are not limited to those mentioned above, and other effects not mentioned herein may be clearly derived and understood from the following description by those having ordinary knowledge in the technical field to which the example embodiments of the disclosure belong. In other words, unintended effects in practicing the example embodiments of the disclosure may be also derived by one skilled in in the art from the example embodiments of the disclosure.

[Brief Description of Drawings]

The above and other aspects, features, and advantages of certain embodiments of the present disclosure will be more apparent from the following description, taken in conjunction with the accompanying drawings, in which:

FIG. 1 is a block diagram illustrating an example configuration of a display device according to various embodiments;
FIG. 2 is a circuit diagram illustrating an example configuration of a power factor correction converter according to various embodiments;
FIG. 3 is a perspective view illustrating an example of a core included in an inductor according to various embodiments;

FIG. 4 is a cross-sectional view illustrating an example inductor according to various embodiments;

FIG. 5 is a diagram illustrating an example configuration of an inductor according to various embodiments;

FIG. 6 is a perspective view illustrating an example of a center-leg portion of an inductor according to various embodiments;

FIGS. 7A and 7B are perspective views illustrating an example of a center-leg core of an inductor according to various embodiments;

FIG. 8 is a perspective view illustrating an example of a center-leg core of an inductor according to various embodiments;

FIG. 9 is a diagram illustrating an example configuration of an inductor according to various embodiments;

FIG. 10 is a perspective view illustrating an example of a center-leg portion of an inductor according to various embodiments;

FIGS. 11A, 11B, 11C and 11D are perspective views illustrating an example arrangement of a center-leg core of an inductor according to various embodiments;

FIG. 12 is a perspective view illustrating an arrangement of a center-leg core of an inductor according to various embodiments;

FIG. 13 is a diagram illustrating inductance for each type of center-leg cores of a power factor correction converter according to various embodiments; and

FIGS. 14A and 14B are charts illustrating heat generation and efficiency for each type of a center-leg core of a power factor correction converter according to various embodiments.

**[Mode for Invention]**

Hereinafter, various example embodiments will be described in greater detail with reference to the accompanying drawings. In the following description, specific details such as detailed configurations and components will be provided simply to aid in a general understanding of various example embodiments of the disclosure. Therefore, it would be apparent to those skilled in the art that various changes and modifications may be made without departing from the scope and spirit of the disclosure. Further, descriptions of well-known features and configurations may be omitted for clarity and brevity.

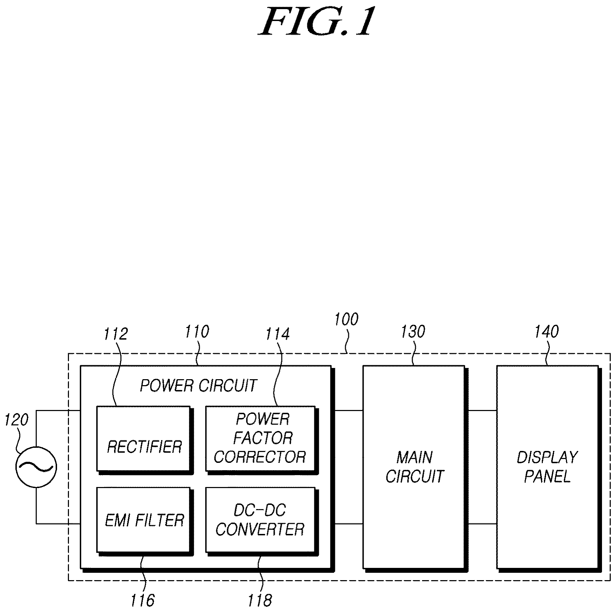

FIG. 1 is a block diagram illustrating an example configuration of a display device 100 according to various embodiments.

The display device 100 may be an electronic device capable of displaying an image. For example, the display device 100 may include at least one of a television, a computer, a smartphone, a tablet computer, a portable media player, a wearable device, a video wall, and/or an electronic picture frame, or the like, but is not limited thereto. For example, the display device 100 may include at least one of a video processing device such as a set-top box without a display, a household appliance such as a refrigerator or a washing machine, and/or an information processing device, e.g., a computer apparatus.

Referring to FIG. 1, the display device 100, according to an embodiment, may include at least one of a power circuit 110, a main circuit 130, and a display panel 140. The power circuit 110, the main circuit 130, and the display panel 140 may be electrically or operably connected to each other by an electronic component, such as a power line or a communication bus. The power circuit 110 of the display device 100 may be electrically connected to a power source 120 supplied from a power distribution system. The display device 100 may include a power plug electrically coupled between the power circuit 110 and the power source 120. Through the power plug, the power circuit 110 of the display device 100 may receive an AC signal from the power source 120. For example, the AC signal received by the power circuit 110 may be a power signal having a voltage that varies over time. The voltage of the AC signal may vary along a sinusoidal wave having a specified frequency (e.g., 60 Hz and/or 120 Hz) and a specified signal amplitude (e.g., 220 V and/or 110 V).

The type and/or number of hardware components included in the display device 100 are not limited to those illustrated in FIG. 1. For example, the display device 100 may include only some of the hardware components illustrated in FIG. 1.

According to an example, the display device 100 may include the power circuit 110 for providing electric power to a load, such as the main circuit 130 and the display panel 140. The power circuit 110 may generate a DC signal having a constant voltage based on an AC signal received from the power source 120. For example, the power circuit 110 may output a DC signal to the main circuit 130 or the display panel 140 included in the display device 100.

The power circuit 110 may include at least one of a rectifier 112, a power factor corrector (e.g., including circuitry) 114, an electromagnetic interference (EMI) filter 116, and a DC-DC converter 118. The hardware components included in the power circuit 110 are not limited to those illustrated in FIG. 1, and the power circuit 110 may further include circuits such as a lightning protection circuit, a varistor, and a surge arrester.

The rectifier 112 may rectify an AC signal from the power source 120 to output a rectified AC signal. The rectifier 112 may include at least one diode for rectifying the AC signal. For example, the rectifier 112 may include a bridge diode circuit that performs full-wave rectification onto the AC signal of the power source 120. For example, the power source 120 may perform half-wave rectification onto the AC signal. The circuitry included in rectifier 112 is not limited to a bridge diode and may include any other circuitry in a non-bridge scheme.

The power factor corrector 114 may include various circuitry and adjust a power factor of an AC signal or a DC signal provided to the power circuit 110. The power factor may refer to a ratio between an active power consumed by a load and an apparent power provided to the load. For example, the power factor corrector 114 may adjust the power factor by reducing the reactive power of the AC signal. For example, the power factor corrector 114 may adjust the power factor by increasing the active power of the AC signal. For example, the power factor corrector 114 may adjust the power factor by synchronizing a phase of the voltage and current of the AC signal received by the display device 100.

The EMI filter 116 may remove or reduce noise contained in the AC signal from the power source 120. For example, the filter 116 may provide to the rectifier 112 with an AC signal in which the noise has been removed.

The DC-DC converter 118 may provide an operating power to each of the main circuit 130 and the display panel 140, based on the power converted by the power factor corrector 114. For example, the DC-DC converter 118 may be adapted to apply a different DC voltage to each of hardware components of the display device 100, as required by the hardware components. The DC-DC converter 118 may include at least one of an isolated type of DC-DC converter, a flyback converter, or a forward converter.

According to an example, the display device 100 may include the main circuit 130 that controls the display panel 140. The main circuit 130 may include a processor (e.g., including processing circuitry) and a memory for executing one or more functions of the display device 100. For example, the main circuit 130 may include a timing controller that generates timing signals for outputting an image on the display panel 140. The timing controller may be included within a display drive circuit (not shown) in the display panel 140.

The main circuit 130 may be electrically coupled with at least one switch for obtaining a user input. For example, the at least one switch may be exposed through a housing of the display device 100. In an embodiment, the main circuit 130 may include communication circuitry for communicating with an external electronic device for obtaining a user input, such as a remote control. The communication circuitry may communicate with the external electronic device based on a wireless communication protocol such as infrared communication, Bluetooth, or Wi-Fi. The main circuit 130 may include a printed circuit board that includes at least one of chipset, processor, memory, electronic component, or wiring for executing one or more functions. For example, the main circuit 130 may take the form of a system-on-chip.

According to an example, the display device 100 may include the display panel 140 that is controlled by the main circuit 130 and outputs an image. The display panel 140 may output visualized information to a user. For example, the display panel 140 may include a flat panel display. The flat panel display may include a liquid crystal display, a plasma display panel, and at least one light emitting diode (LED). The LED may include an organic LED. For example, the display panel 140 may include an electronic paper. The display panel 140 may include at least one display driver integrated circuit. For example, in case where the display panel 140 includes a plurality of LEDs arranged in a two-dimensional matrix, the display driver circuit may control at least one LED arranged in a corresponding row or column of a plurality of LEDs. For example, the display drive circuitry may adjust luminance and brightness of the plurality of LEDs by controlling the at least one LED.

Although not shown herein, the display device 100 according to an embodiment may include various output means for outputting information in a form other than a visualized form. For example, the display device 100 may further include at least one speaker operating with a DC signal supplied from the power circuit 110 and outputting an acoustic signal.

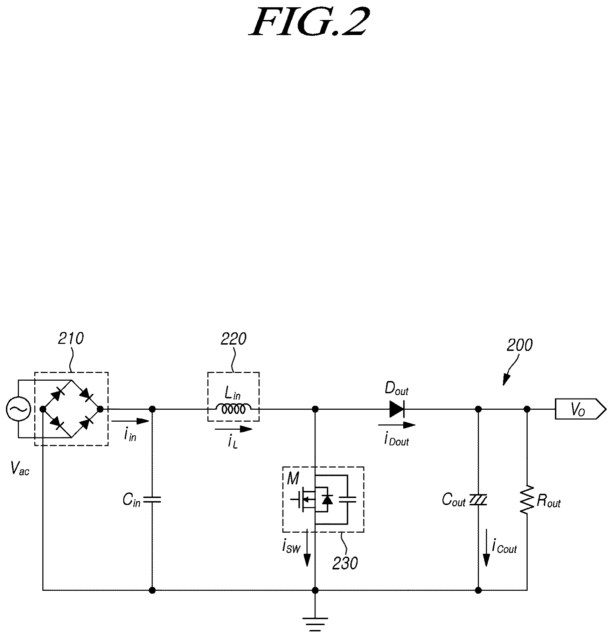

FIG. 2 is a circuit diagram illustrating an example of a power factor correction converter 200 according to various embodiments. The power factor correction converter 200 may include at least some of the hardware components in the power circuit 110 of FIG. 1.

Referring to FIG. 2, the power factor correction converter 200 may include a rectifier 210, an inductor $L_{in}$ 220, and a switching unit (e.g. including a switch) 230. The power factor correction converter 200 may further include an input capacitor $C_{in}$, an output diode $D_{out}$, an output capacitor $C_{out}$, and an output resistor $R_{out}$.

The rectifier 210 may rectify an input AC voltage ($V_{ac}$) to a DC voltage. For example, the rectifier 210 may be implemented as a bridge rectifier including at least one diode.

The inductor 220 may store energy (e.g., electric power) that is transferred through the rectifier 210. The inductor 220 may be connected in series with an output terminal of the rectifier 210. For example, one end of the inductor 220 may be connected to the rectifier 210 for inputting a current $i_L$, and the other end thereof may be connected to the output diode $D_{out}$ and the switching unit 230.

Current may flow through the inductor $L_{in}$ 220 based on the switching operation of the switching unit 230. In an embodiment, the inductor $L_{in}$ 220 may be a boost inductor. The inductor $L_{in}$ 220 may generate a voltage greater than the input voltage. For example, when the switching unit 230 is in ON state, the inductor $L_{in}$ 220 may be charged with energy caused by a current $i_L$. For example, when the switching unit 230 is in OFF state, a voltage greater than the input voltage may be generated as the energy charged in the inductor $L_{in}$ 220 is discharged.

The switching unit 230 may be connected between the inductor $L_{in}$ 220 and the output diode $D_{out}$. The switching unit 230 may include a switch (e.g., switching circuitry) and perform its switching operation based on a control signal. In an embodiment, the switching unit 230 may include at least one switching element M. The switching element M may be turned ON or OFF at a predetermined rate based on the control signal input to its gate.

In an embodiment, the power factor correction converter 200 may perform a power factor correction, by causing a sinusoidal current of the input AC voltage ($V_{ac}$) and the same frequency and phase to flow, based on a control signal input to the switching unit 230. For example, the power factor correction converter 200 may be a boost power factor correction converter. The boost power factor correction converter may operate in at least one of a continuous conduction mode, a critical conduction mode, and a discontinuous conduction mode. For example, for an electronic device having an output with a capacity of less than 250W, the boost power factor correction converter may operate in the critical conduction mode taking into consideration switch losses and heat generation.

In an embodiment, the power factor correction converter 200 may include an input capacitor $C_{in}$ connected with at an input terminal of the inductor $L_{in}$ 220. The power factor correction converter 200 may include an output diode $D_{out}$ coupled to an output end of the inductor $L_{in}$ 220, an output capacitor $C_{out}$, and an output resistor $R_{out}$. The power factor correction converter 200 may further include an auxiliary inductor (not shown) for coupling with at least one of the input terminal and the output terminal of the inductor $L_{in}$ 220. Here, the auxiliary inductor (not shown) may be adapted to correct current characteristics of the power factor correction converter 200. For example, the power factor correction converter 200 may include an input filter including an auxiliary inductor and an input capacitor $C_{in}$. For example, the power factor correction converter 200 may include an output filter including an auxiliary inductor (not shown) and an output capacitor $C_{out}$. For example, the power factor correction converter 200 may include both the input filter and the output filter.

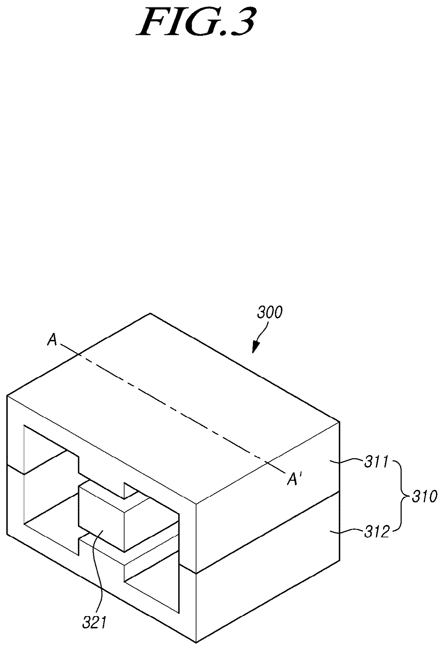

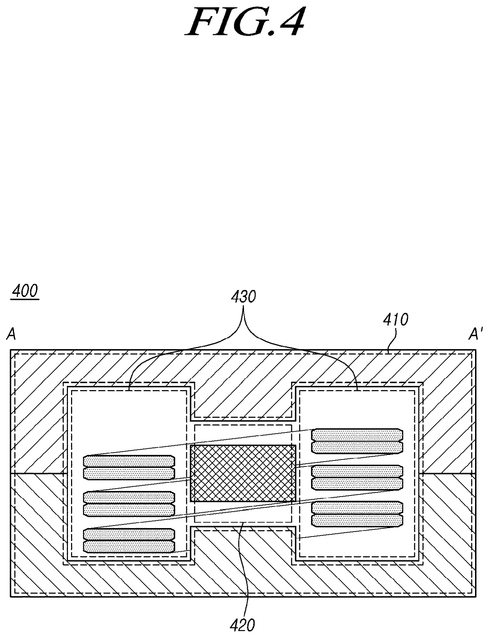

FIG. 3 is a perspective view illustrating a core 300 included in an example inductor according to various embodiments, and FIG. 4 is a cross-sectional view of an example inductor 400 according to various embodiments. The inductor illustrated in FIGS. 3 and 4 may be the inductor 220 (e.g., the inductor $L_{in}$) of FIG. 2.

Referring to FIG. 3, the inductor may include a core 300. For example, the core 300 may include an outer-leg core 310 and a center-leg core 321. The outer-leg core 310 may include an upper outer-leg core 311 and a lower outer-leg core 312. Each of the upper outer-leg core 311 and the lower outer-leg core 312 may be E-shaped. The center-leg core 321 may be disposed between the upper outer-leg core 311 and the lower outer-leg core 312, spaced apart from each of the upper outer-leg core 311 and the lower outer-leg core 312 by a predetermined distance. For example, an air gap may be formed between the center-leg core 321 and each of the upper and lower outer-leg cores.

The core 300 may have a shape associated with the interaction of the magnetic flux induced by the inductor. For example, the shape of the core 300 may be determined based on at least one of a magnetization inductance or a leakage inductance associated with the interaction of the magnetic fields. The core 300 may have a predetermined permeability. For example, the inductor may have an inductance determined based on the permeability of the core 300.

Referring to FIG. 4, the inductor 400 may include an outer-leg portion 410, a center-leg portion 420, and a coil portion 430. For example, the inductor 400 may have a configuration with a coil wound on the core 300 of FIG. 3. For example, the inductor 400 may include an outer-leg portion 410 having an upper outer-leg core and a lower outer-leg core, a center-leg portion 420 having at least one middle-core and at least one air gap, and a coil portion 430 having a coil.

The outer-leg portion 410 may include an upper outer-leg core and a lower outer-leg core. For example, the upper outer-leg core may correspond to the upper outer-leg core 311 of FIG. 3. For example, the lower outer-leg core may correspond to the lower outer-leg core 312 of FIG. 3. Each of the upper outer-leg core and the lower outer-leg core may be E-shaped.

The center-leg portion 420 may include at least one center-leg core and at least one air gap. For example, the at least one center-leg core may correspond to the center-leg core 321 of FIG. 3. The center-leg core may be disposed between the upper outer-leg core and the lower outer-leg core. At least one air gap may be formed between the center-leg core and each of the upper-outer and lower outer-leg cores. For example, the center-leg portion 420 may include the air gap formed in an uppermost part and the lowermost part of the at least one center-leg core, respectively.

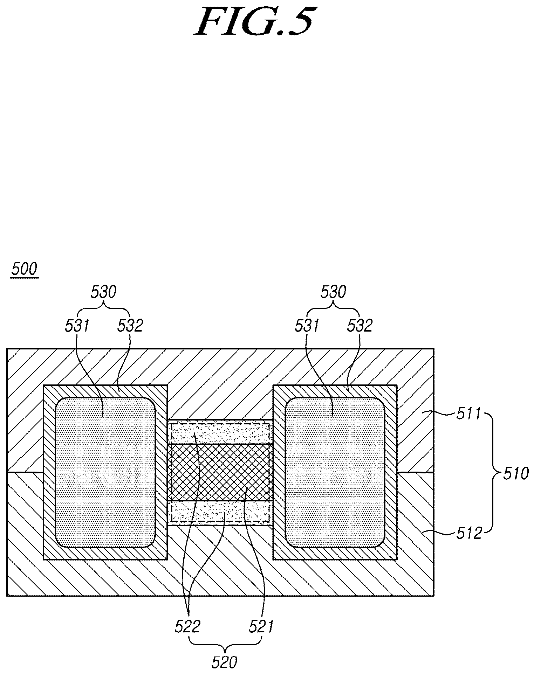

In an embodiment, the center-leg core may include an inner hole. This configuration will be described in greater detail below with reference to FIGS. 5 through 12.

The coil portion 430 may include a coil and a bobbin. The coil can include wires wound on at least a portion of an upper outer-leg core, a lower outer-leg core, and a center-leg core. For example, the performance and efficiency of the inductor 400 may be changed depending on the number of windings of the coil. The bobbin may serve to hold the shape of the coil and secure the same. For example, the bobbin may include at least one of iron core, ferrite, and other magnetic materials.

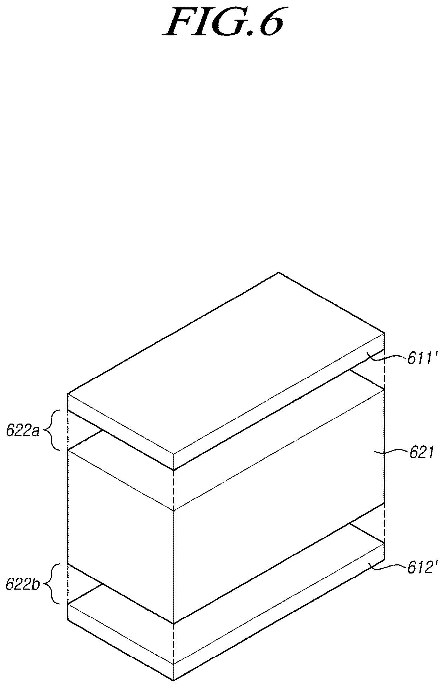

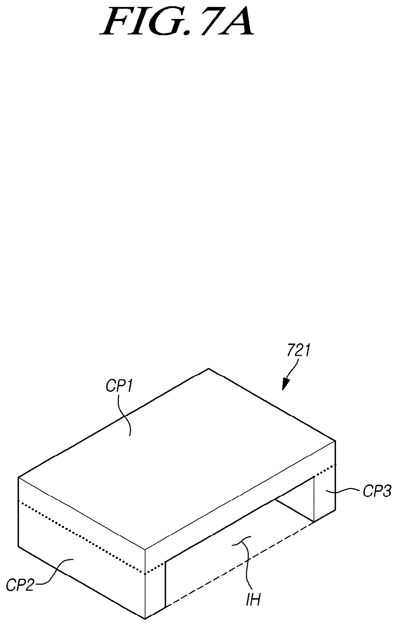

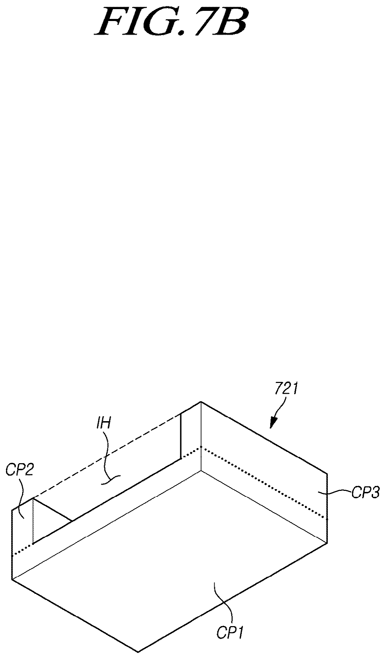

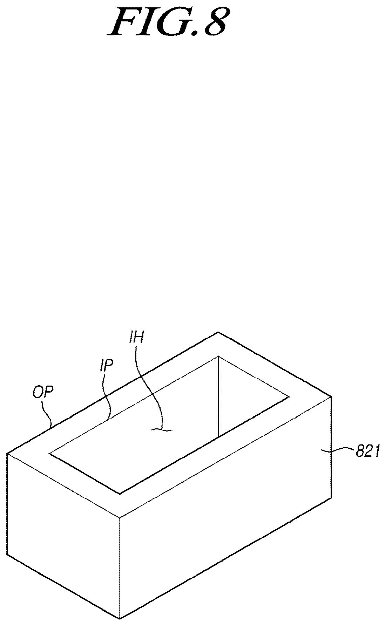

FIG. 5 is a diagram illustrating an example configuration of an inductor according to various embodiments, FIG. 6 is a perspective view illustrating a center-leg core of an inductor according to various embodiments, FIGS. 7A and 7B are perspective views illustrating an example center-leg core of an inductor according to various embodiments, and FIG. 8 is a perspective view illustrating a center-leg core of an inductor according to various embodiments.

Referring to FIG. 5, an inductor 500 according to an embodiment may include an outer-leg portion 510, a center-leg portion 520, and a coil portion 530.

The outer-leg portion 510 may include an upper outer-leg core 511 and a lower outer-leg core 512. Each of the upper outer-leg core 511 and the lower outer-leg core 512 may be E-shaped. The center-leg portion 520 may include at least one center-leg core 521 and at least one air gap 522. The at least one air gap 522 may include a filler material. For example, the at least one air gap 522 may be filled with epoxy. The coil portion 530 may include a coil 531 and a bobbin 532. The coil 531 may include wires wound on at least a portion of the upper outer-leg core 511, the lower outer-leg core 512, and the center-leg core 521. For example, the performance and efficiency of the inductor 500 may change depending on the number of windings of the coil 531.

Referring to FIG. 6, the center-leg portion (e.g. 520 of FIG. 5) may include a first air gap 622a formed between a first center-leg core 621 and an upper outer-leg core 611', and a second air gap 622b formed between the first center-leg core 621 and the lower outer-leg core 612'.

The inductor 500 according to an embodiment may reduce a fringing effect. For example, the fringing effect may be expressed as the Equation 1 below:

[Equation 1]

$$F = \frac{(b_k + s_p/n)(h_k + s_p/n)}{b_k h_k} \approx 1 + 2,5\frac{s_p/n}{\sqrt{A}}$$

$b_k$: with of center leg
$h_k$: depth of center leg

wherein 'F' is an effect due to the fringing flux, 'Sp' is an air gap length, 'n' is the number of air gaps, and 'A' is a cross-sectional area of the center-leg core. As expressed in Equation 1, the fringing effect (F) decreases as the number (n) of air gaps increases.

The inductor and the power factor correction converter including the inductor according to an embodiment may include at least two air gaps 622a and 622b in a center-leg portion 620, thereby reducing the fringing effect, compared to when there is one or no air gap. Thus, the inductor and the power factor correction converter including the inductor according to the disclosure may reduce heat generation due to the fringing effect.

In an embodiment, the at least one center-leg core 621 may have a greater permeability than that of the upper outer-leg core 611' and the lower outer-leg core 612' included in the outer-leg portion.

For example, the at least one center-leg core 621 may have a permeability in the range of 9 to 11 times to that of the upper outer-leg core 611' and the lower outer-leg core 612'.

For example, the relative permeability of the at least one center-leg core 621 may be in a range of 7,000 and 20,000.

The inductor and the power factor correction converter comprising the same, according to an embodiment, may have an increased inductance, owing to at least the center-leg core 621 having a high relative permeability. Therefore, the inductor and the power factor correction converter including the same, according to an embodiment, may minimize and/or reduce switching losses as its operating frequency decreases.

In an embodiment, the at least one center-leg core may include an inner hole IH. For example, the inner hole IH (see, e.g., FIGS. 7A, 7B and 8) may perform the same function as the at least one air gap inside the center-leg core. For example, when the center-leg core includes such an inner hole IH, an air gap length that is viewed from the outside of the center-leg core may be less than a reference air gap length.

Referring to FIGS. 7A and 7B, at least one center-leg core 721 may include a U-shaped structure with an open side. An inner hole IH may be formed in the inside of the U-shaped structure.

For example, the at least one center-leg core 721 may include a first core plate CP1 formed in a first direction, a second core plate CP2 extending from a first end of the first core plate CP1 in a second direction perpendicular to the first direction, and a third core plate CP3 extending from a second end of the first core plate CP1 in the second direction, parallel to the second core plate CP2.

As shown in FIGS. 7A and 7B, the inner hole IH may be formed in an inner side of the first core plate CP1, the second core plate CP2, and the third core plate CP3. For example, as shown in FIG. 7A, the inner hole IH may be formed in a vertical downward direction of the first core plate CP1. For example, as shown in FIG. 7B, the inner hole IH may be formed in a vertical upward direction of the first core plate CP1.

Referring to FIG. 8, at least one center-leg core 821 may have a pillar structure with a hollow interior therein. An inner hole IH may be formed in an internal space of the pillar structure.

For example, at least one center-leg core 821 may include a pillar-type core in which a core plate having an outer periphery OP and an inner periphery IP extending in a vertical direction. For example, the outer periphery OP and the inner periphery IP may form a predetermined thickness of the at least one center-leg core 821.

As shown in FIG. 8, the inner hole IH may be defined inside a pillar-type core surrounded by the inner periphery IP.

In an embodiment, according to the at least one center-leg core (721, 821) including the inner hole IH, as shown in FIGS. 7A, 7B and 8, the at least one air gap (622a, 622b) in the center-leg portion may be formed having a length shorter than a reference air gap length. The reference air gap length may refer to an air gap length of a center-leg core that does not include an inner hole IH, under the same conditions. For example, in case that the at least one air gap is formed having a length shorter than the reference air gap length, the penetration depth of the fringing magnetic flux into the coil may be reduced. The length of the air gap may be referred to as width or height, depending on the perspective.

The inductor and the power factor correction converter including the same, according to an embodiment, may include an internal hole that perform the same function as the at least one air gap inside the center-leg core, thereby minimizing and/or reducing the air gap length. Therefore, the inductor and the power factor correction converter including the same, according to an embodiment, may minimize and/or reduce heat generation, by reducing the penetration depth of the fringing flux into the coil.

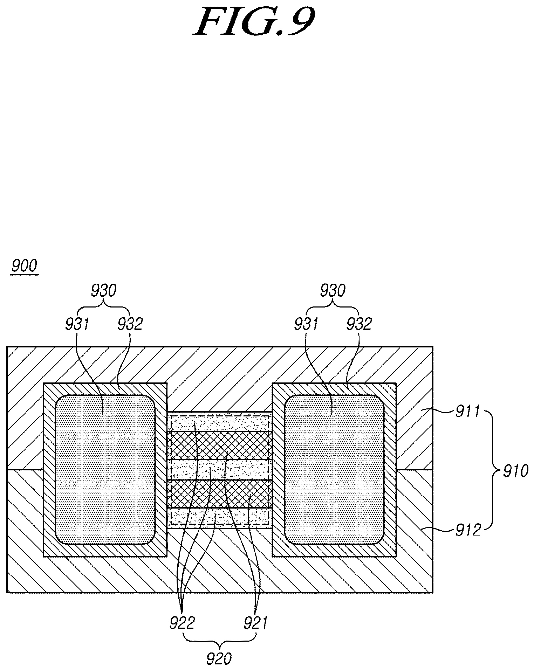

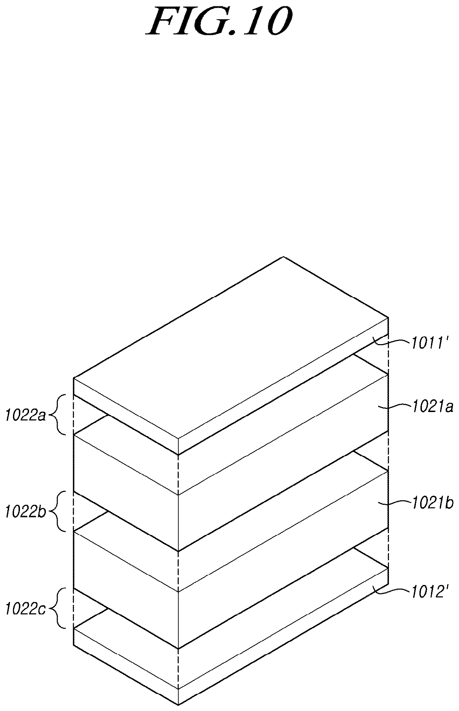

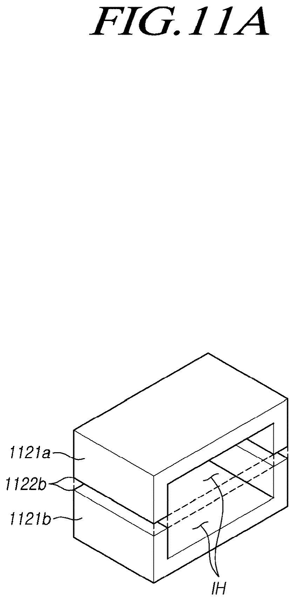

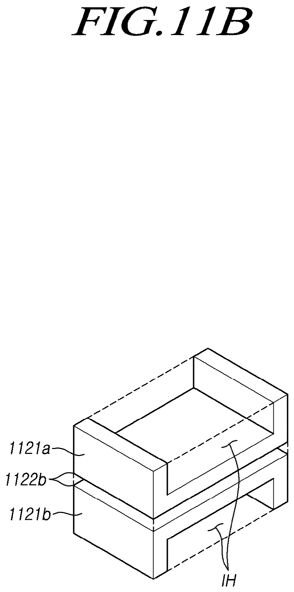

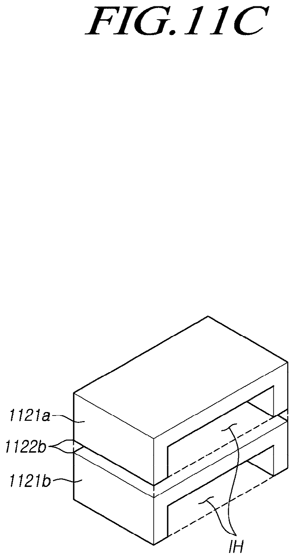

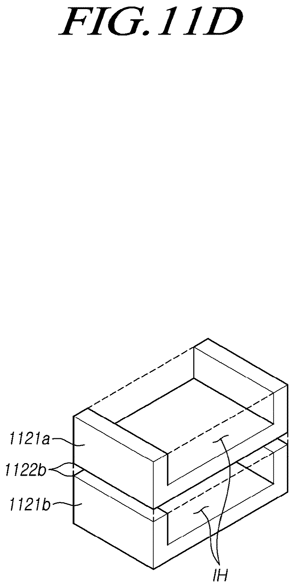

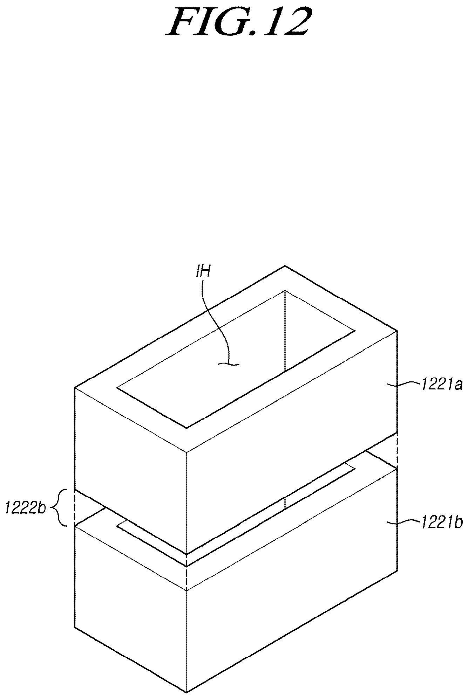

FIG. 9 is a diagram illustrating an example configuration of an inductor according to various embodiments, FIG. 10 is a perspective view illustrating an example center-leg portion of an inductor according to various embodiments, FIGS. 11A, 11B, 11C and 11D are perspective views illustrating an example arrangement of a center-leg core of an inductor according to various embodiments, and FIG. 12 is a perspective view illustrating an example arrangement of a center-leg core of an inductor according to various embodiments.

Referring to FIG. 9, an inductor 900 according to an embodiment may include an outer-leg portion 910, a center-leg portion 920, and a coil portion 930.

The outer-leg portion 910 may include an upper outer-leg core 911 and a lower outer-leg core 912. Each of the upper outer-leg core 911 and the lower outer-leg core 912 may be E-shaped. The center-leg portion 920 may include at least one center-leg core 921 and at least one air gap 922. The at least one air gap 922 may include a filler material. For example, the at least one air gap 922 may be filled with epoxy. The coil portion 930 may include a coil 931 and a bobbin 932. The coil 931 may include wires wound on at least a portion of the upper outer-leg core 911, the lower outer-leg core 912, and the center-leg core 921. For example, the performance and efficiency of the inductor 900 may change depending on the number of windings of the coil 931.

Referring to FIG. 10, a center-leg portion (e.g., the center-leg portion 920 in FIG. 9) may include a first center-leg core 1021a, a second center-leg core 1021b, a first air gap 1022a formed between the first center-leg core 1021a and an upper outer-leg core 1011', a second air gap 1022b formed between the first center-leg core 1021a and the second center-leg core 1021b, and a third air gap 1022c formed between the second center-leg core 1021b and a lower outer-leg core 1012'.

The inductor 900 according to an embodiment may reduce the fringing effect. For example, as shown in the above Equation 1, it may be seen that the fringing effect decreases as the number (n) of air gaps increases.

Owing to at least three air gaps (1022a, 1022b, 1022c) in the center-leg portion 1020, the inductor and the power factor correction converter including the inductor, according to an embodiment, may reduce the fringing effect, compared to those having two or less air gaps. Thus, the inductor and the power factor correction converter, according to the disclosure, may reduce heat generation by the fringing effect.

In an embodiment, the at least one center-leg core (1021a, 1021b) may have a higher permeability than the upper outer-leg core 1011' and the lower outer-leg core 1012' included in the outer-leg portion.

For example, the at least one center-leg core (1021a, 1021b) may have a permeability in the range of 9 to 11 times greater compared to that of the upper outer-leg core 1011' and the lower outer-leg core 1012'.

For example, the relative permeability of the at least one center-leg core (1021a, 1021b) may be in a range of 7,000 and 20,000.

The inductor and the power factor correction converter including the same according to an embodiment may have an increased inductance, by including the center-leg core (1021a, 1021b) having a high relative permeability. Thus, the inductor and the power factor correction converter including the inductor according to the disclosure may minimize and/or reduce switching losses as its operating frequency decreases.

In an embodiment, the at least one center-leg core may include an inner hole IH. For example, the inner hole IH (see, e.g., FIGS. 11A, 11B, 11C and 11D) may perform the same function as the at least one air gap inside the center-leg core. For example, when the center-leg core includes an inner hole IH, an air gap length that is viewed from the outside of the center-leg core may be shorter than a reference air gap length.

Referring to FIGS. 11A, 11B, 11C and 11D, the at least one center-leg core (1121a, 1121b) may have a U-shaped structure with an open side. An inner hole IH may be formed in the interior of the U-shaped structure. The at least one center-leg core (1121a, 1121b) may include a first core plate formed in a first direction, a second core plate extending from a first end of the first core plate in a second direction perpendicular to the first direction, and a third core plate extending from a second end of the first core plate in the second direction, parallel to the second core plate. A second air gap 1122b may be formed between the first center-leg core 1121a and the second center-leg core 1121b. For example, the first center-leg core 1121a and the second center-leg core 1121b may be disposed in various orientations.

As shown in FIG. 11A, an inner hole IH of the first center-leg core 1121a may be formed in a vertical downward direction of the first core plate. An inner hole IH of the second center-leg core 1121b may be formed in a vertical upward direction of the first core plate.

As shown in FIG. 11B, the inner hole IH of the first center-leg core 1121a may be formed in the vertical upward direction of the first core plate. The inner hole IH of the second center-leg core 1121b may be formed in the vertical downward direction of the first core plate.

As shown in FIG. 11C, the inner hole IH of the first center-leg core 1121a may be formed in the vertical downward direction of the first core plate. The inner hole IH of the second center-leg core 1121b may be formed in the vertical downward direction of the first core plate.

As shown in FIG. 11D, the inner hole IH of the first center-leg core 1121a may be formed in the vertical upward direction of the first core plate. The inner hole IH of the second center-leg core 1121b may be formed in the vertical upward direction of the first core plate.

Referring to FIG. 12, the at least one center-leg core (1221a, 1221b) may have a pillar structure with a hollow inner space. The inner hole IH may be formed in the inner space of the pillar structure. A second air gap 1222b may be formed between the first center-leg core 1221a and the second center-leg core 1221b.

For example, the at least one center-leg core (1221a, 1221b) may include a pillar-type core in which a core plate, including an outer periphery and an inner periphery, extends in the vertical direction. For example, the outer periphery and the inner periphery may form a predetermined thickness of the at least one center-leg core (1221a, 1221b).

As shown in FIG. 12, the inner hole IH may be defined by an inner side of the pillar-type core surrounded by an inner periphery.

In an embodiment, as shown in FIGS. 11A, 11B, 11C, 11D and 12, according to the at least one center-leg core (1121a, 1121b, 1221a, 1221b) including the inner hole IH, at least one air gap (1022a, 1022b, 1022c in the center-leg core may have a length shorter than a reference air gap length. The reference air gap length may refer to an air gap length of a center-leg core that does not have an internal hole IH, under the same conditions. For example, when the at least one air gap is formed with the reference air gap length less, a penetration depth of the fringing magnetic flux into the coil may be reduced.

The inductor and the power factor correction converter including the inductor, according to an embodiment, may include internal holes that perform the same function as the at least one air gap inside the center-leg core, thereby minimizing and/or reducing the air gap length. The inductor and the power factor correction converter including the same, according to an embodiment, may minimize and/or reduce heat generation by reducing the penetration depth of the fringing flux into the coil.

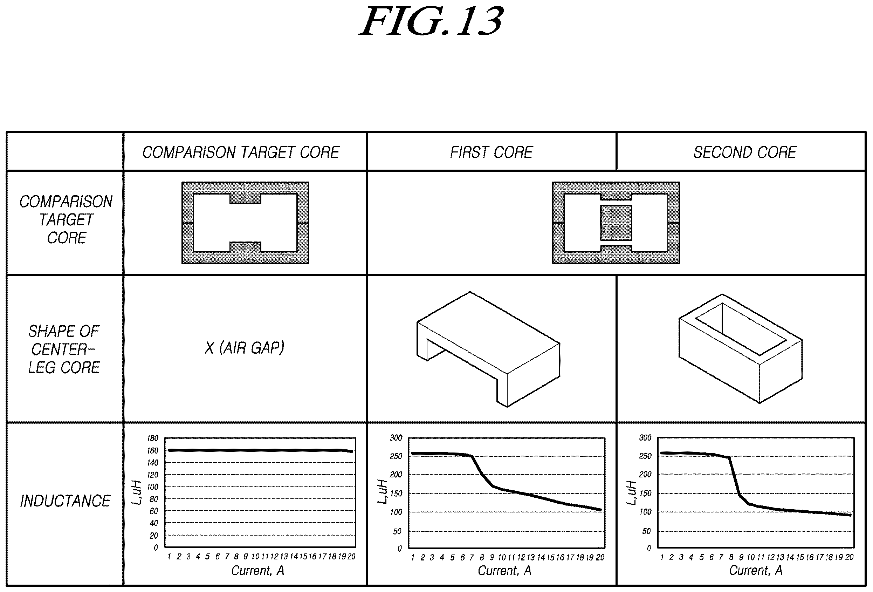

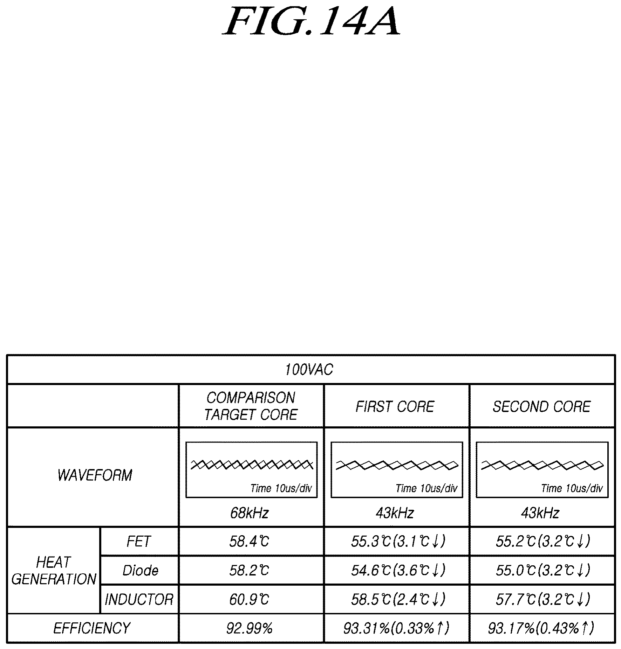

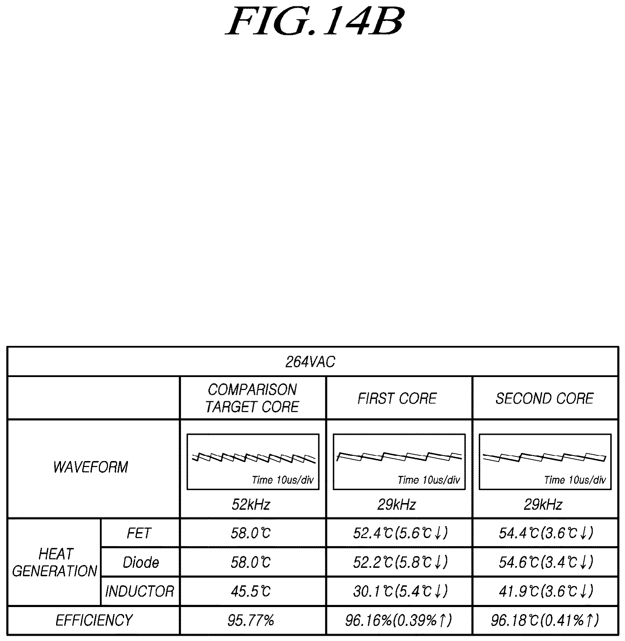

FIG. 13 is a diagram including a chart illustrating inductance for each type of center-leg cores of the power factor correction converter according to various embodiments, and FIGS. 14A and 14B are charts illustrating heat generation and efficiency for each type of center-leg cores of the power factor correction converter according to various embodiments. In FIGS. 13, 14A and 14B, the comparison target core may be a prior art core, and the first core and the second core may be cores applied to the inductor and the power factor correction converter including the same according to the disclosure.

Referring to FIG. 13, the comparison target core, having no center-leg core, has a constant current value as the load current changes, while the first core and second core, having a center-leg core, have a section where the inductance is kept substantially constant and another section where the inductance decreases sharply as the load current increases.

Referring to FIGS. 14A and 14B, each of a 100 VAC condition illustrated in FIG. 14A and a 264 VAC condition illustrated in FIG. 14B, the first core and second core have reduced heat generation in FETs, diodes, and inductors, compared to the comparison target core. Further, each of the 100 VAC condition illustrated in FIG. 14A and the 264 VAC condition illustrated in FIG. 14B, the first and second cores have increased efficiency compared to the comparison target core.

As such, the first core and second core applied to the inductor of the present disclosure and the power factor correction converter including the inductor may have an improved inductance compared to a conventional comparison target core. Further, the first core and the second core may have reduced heat generation compared to a conventional comparison target core. Further, the first core and the second core may have an increased efficiency compared to a conventional comparison target core.

However, since this has been already described above in detail, a redundant description thereof may not be repeated here for conciseness.

The electronic device according to various embodiments disclosed in the present disclosure may be one of various types of electronic devices. The electronic device may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements of a corresponding embodiment. For example, a component expressed in the singular is to be understood as including a plurality of components unless the context clearly indicates a singular meaning. As used in the present disclosure, the term "and/or" is to be understood to encompass all possible combinations of one or more of the enumerated items. As used in the disclosure, the terms "comprise(s)", "have/has", "include(s)", "consist(s) of', or the like are intended only to designate the presence of features, components, parts, or combinations thereof described in the present disclosure, and the use of such terms is not intended to exclude the possibility of presence or addition of one or more other features, components, parts, or combinations thereof. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

As used in various embodiments of the disclosure, the term "part" or "module" may include a unit implemented in hardware, software, or firmware, or any combination thereof, and may interchangeably be used with other terms, such as, for example, "logic", "logic block", "part" or "circuit". A "part" or "module" may be a single integral component, or a minimum unit or part thereof, adapted to perform one or more functions. For example, according to an embodiment, the "part" or "module" may be implemented in a form of an application-specific integrated circuit (ASIC).

As used in various embodiments of the present disclosure, the term "in case that ~" may be interpreted to refer to "when ~" or "upon ~ " or "in response to determining ~" or "in response to detecting ~", depending on the context. Similarly, "in case that it is determined ~" or "in case that it is detected ~" may be interpreted to refer to "when determining -" or "in response to determining ~" or "when detecting ~" or "in response to detecting ~", depending on the context.

According to various embodiments, each component (e.g., a module or a program) of the above-described components may include a single entity or multiple entities, and some of the multiple entities may be separately disposed in different components. According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

**Claims**

1.   A power factor correction converter, comprising:

   a rectifier configured to rectify an alternating current (AC) voltage to a direct current (DC) voltage;
   an inductor configured to store energy; and
   a switching unit comprising at least one switch,
   wherein the inductor comprises:

      an outer-leg portion including an upper outer-leg core and a lower outer-leg core;
      a center-leg portion including at least one center-leg core and at least one air gap; and
      a coil portion including a coil, and
      wherein the center-leg core comprises an inner hole.

2.   The power factor correction converter of claim 1,

   wherein the at least one center-leg core comprises a U-shaped structure with an open side, and
   wherein the inner hole is formed inside the U-shaped structure.

3.   The power factor correction converter of claim 1,
   wherein the at least one center-leg core comprises:

a first core plate formed in a first direction;

a second core plate extending from a first end of the first core plate in a second direction perpendicular to the first direction; and

a third core plate extending from a second end of the first core plate in the second direction, parallel to the second core plate, and

wherein the inner hole is formed inside a U-shaped structure formed by an arrangement of the first core plate, the second core plate, and the third core plate.

4. The power factor correction converter of claim 1,

wherein the at least one center-leg core comprises a pillar structure having an empty inner space, and
wherein the inner hole is formed in the inner space of the pillar structure.

5. The power factor correction converter of claim 1,

wherein the at least one center-leg core comprises a pillar core including a core plate including an outer periphery and an inner periphery extending in a vertical direction, and
wherein the inner hole is formed inside the pillar core.

6. The power factor correction converter of any one of the preceding claims, wherein the at least one center-leg core has a permeability greater than a permeability of the upper outer-leg core and the lower outer-leg core included in the outer-leg portion.

7. The power factor correction converter of any one of the preceding claims, wherein a relative permeability of the at least one center-leg core is in a range of 7,000 to 20,000.

8. The power factor correction converter of any one of the preceding claims, wherein the at least one air gap has a length shorter than a reference air gap length.

9. The power factor correction converter of any one of the preceding claims, wherein the center-leg portion comprises:

a first center-leg core;
a first air gap formed between the first center-leg core and the upper outer-leg core; and
a second air gap formed between the first center-leg core and the lower outer-leg core.

10. The power factor correction converter of any one of the preceding claims, wherein the center-leg portion comprises:

a first center-leg core;
a second center-leg core;
a first air gap formed between the first center-leg core and the upper outer-leg core;
a second air gap formed between the first center-leg core and the second center-leg core; and
a third air gap formed between the second center-leg core and the lower outer-leg core.

11. An inductor for a power factor correction converter, comprising:

an outer-leg portion comprising an upper outer-leg core and a lower outer-leg core;
a center-leg portion comprising at least one center-leg core and at least one air gap; and
a coil portion including a coil,
wherein the center-leg core includes an inner hole.

12. The inductor of claim 11,

wherein the at least one center-leg core comprises a U-shaped structure with an open side, and
wherein the inner hole is formed inside the U-shaped structure.

13. The inductor of claim 11, wherein the at least one center-leg core comprises:

a first core plate formed in a first direction;

a second core plate extending from a first end of the first core plate in a second direction perpendicular to the first direction; and

a third core plate extending from a second end of the first core plate in the second direction, parallel to the second core plate, and

wherein the inner hole is formed inside a U-shaped structure formed by an arrangement of the first core plate, the second core plate, and the third core plate.

14. The inductor of claim 11,

wherein the at least one center-leg core comprises a pillar structure having an empty inner space, and
wherein the inner hole is formed in the inner space of the pillar structure.

15. The inductor of claim 11,
wherein the at least one center-leg core comprises a pillar core including a core plate including an outer periphery and an inner periphery extending in a vertical direction, and
wherein the inner hole is formed inside the pillar core.

# FIG.1

POWER CIRCUIT

RECTIFIER

POWER FACTOR CORRECTOR

EMI FILTER

DC-DC CONVERTER

MAIN CIRCUIT

DISPLAY PANEL

# FIG.2

# FIG.3

# *FIG.4*

# *FIG.5*

# *FIG.6*

# *FIG.7A*

# FIG.7B

# FIG.8

# *FIG.9*

# FIG.10

# FIG.11A

# FIG.11B

# FIG.11C

*FIG.11D*

1121a

1122b

1121b

IH

# *FIG.12*

# FIG.13

| | COMPARISON TARGET CORE | FIRST CORE | SECOND CORE |
|---|---|---|---|
| COMPARISON TARGET CORE | | | |
| SHAPE OF CENTER-LEG CORE | X (AIR GAP) | | |
| INDUCTANCE | | | |

EP 4 645 351 A1

# FIG.14A

| 100VAC | | | |
|---|---|---|---|
| | COMPARISON TARGET CORE | FIRST CORE | SECOND CORE |
| WAVEFORM | Time 10us/div<br>68kHz | Time 10us/div<br>43kHz | Time 10us/div<br>43kHz |
| HEAT GENERATION | FET | 58.4℃ | 55.3℃(3.1℃↓) | 55.2℃(3.2℃↓) |
| | Diode | 58.2℃ | 54.6℃(3.6℃↓) | 55.0℃(3.2℃↓) |
| | INDUCTOR | 60.9℃ | 58.5℃(2.4℃↓) | 57.7℃(3.2℃↓) |
| EFFICIENCY | | 92.99% | 93.31%(0.33%↑) | 93.17%(0.43%↑) |

# FIG.14B

| 264VAC | | | |
|---|---|---|---|
| | COMPARISON TARGET CORE | FIRST CORE | SECOND CORE |
| WAVEFORM | Time 10us/div<br>52kHz | Time 10us/div<br>29kHz | Time 10us/div<br>29kHz |
| HEAT GENERATION — FET | 58.0℃ | 52.4℃(5.6℃↓) | 54.4℃(3.6℃↓) |
| HEAT GENERATION — Diode | 58.0℃ | 52.2℃(5.8℃↓) | 54.6℃(3.4℃↓) |
| HEAT GENERATION — INDUCTOR | 45.5℃ | 30.1℃(5.4℃↓) | 41.9℃(3.6℃↓) |
| EFFICIENCY | 95.77% | 96.16%(0.39%↑) | 96.18℃(0.41%↑) |

## INTERNATIONAL SEARCH REPORT

| International application No. |
| --- |
| **PCT/KR2024/095380** |

**A.    CLASSIFICATION OF SUBJECT MATTER**

**H01F 17/04**(2006.01)i; **H01F 27/24**(2006.01)i; **H01F 3/14**(2006.01)i; **H02M 1/42**(2007.01)i

According to International Patent Classification (IPC) or to both national classification and IPC

**B.    FIELDS SEARCHED**

Minimum documentation searched (classification system followed by classification symbols)

H01F 17/04(2006.01); H01F 17/06(2006.01); H01F 27/08(2006.01); H01F 27/24(2006.01); H01F 27/26(2006.01); H01F 27/30(2006.01); H02M 3/335(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 역률 개선 컨버터(power factor correction converter), 인덕터(inductor), 외족(outer leg), 중족(middle leg), 코어(core), 공극(air gap), 내부 홀(inner hole)

**C.    DOCUMENTS CONSIDERED TO BE RELEVANT**

| Category* | Citation of document, with indication, where appropriate, of the relevant passages | Relevant to claim No. |
| --- | --- | --- |
| X | US 2010-0321958 A1 (BRINLEE, Antony et al.) 23 December 2010 (2010-12-23)<br>    See paragraphs [0024], [0029], [0041], [0048] and [0054]; and figures 1, 7 and 12. | 1-6,11-15 |
| A | CN 112133535 A (ANHUI JINSHENGDA BIOLOGICAL ELECTRONIC TECHNOLOGY CO., LTD.) 25 December 2020 (2020-12-25)<br>    See figures 1-3. | 1-6,11-15 |
| A | KR 10-2022-0128133 A (LG INNOTEK CO., LTD.) 20 September 2022 (2022-09-20)<br>    See paragraphs [0014]-[0036]; and figure 6. | 1-6,11-15 |
| A | US 9093212 B1 (PINKERTON, Deborah et al.) 28 July 2015 (2015-07-28)<br>    See figures 1-2. | 1-6,11-15 |
| A | KR 10-2012-0020325 A (SAMSUNG ELECTRONICS CO., LTD.) 08 March 2012 (2012-03-08)<br>    See figures 1-16. | 1-6,11-15 |

☐ Further documents are listed in the continuation of Box C.            ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 May 2024** | **21 May 2024** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2024/095380** |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☑ Claims Nos.: **7-10**
   because they are dependent claims and are not drafted in accordance with the second and third sentences of Rule 6.4(a).

Form PCT/ISA/210 (continuation of first sheet) (July 2022)

| INTERNATIONAL SEARCH REPORT<br>Information on patent family members | | | International application No.<br>**PCT/KR2024/095380** | |
|---|---|---|---|---|

| Patent document<br>cited in search report | | Publication date<br>(day/month/year) | Patent family member(s) | | | Publication date<br>(day/month/year) |
|---|---|---|---|---|---|---|
| US | 2010-0321958 A1 | 23 December 2010 | CN | 101931333 | A | 29 December 2010 |
| | | | CN | 101944857 | A | 12 January 2011 |
| | | | CN | 101944857 | B | 17 September 2014 |
| | | | US | 2010-0321964 | A1 | 23 December 2010 |
| | | | US | 2012-0294048 | A1 | 22 November 2012 |
| | | | US | 8514593 | B2 | 20 August 2013 |
| | | | US | 8643222 | B2 | 04 February 2014 |
| | | | US | 9077248 | B2 | 07 July 2015 |
| CN | 112133535 A | 25 December 2020 | None | | | |
| KR | 10-2022-0128133 A | 20 September 2022 | None | | | |
| US | 9093212 B1 | 28 July 2015 | None | | | |
| KR | 10-2012-0020325 A | 08 March 2012 | US | 2012-0049994 | A1 | 01 March 2012 |

Form PCT/ISA/210 (patent family annex) (July 2022)